# EUROPEAN PATENT APPLICATION

(11) **EP 1 280 145 A1**
(43) Date of publication of application: **29.01.2003**
(21) Application number: 01117195.6
(22) Date of filing: 16.07.2001
(51) Int. Cl.: G11B 17/04

(54) **Method and scanning device for magazine-type storage medium**

(71) Applicant: DEUTSCHE THOMSON-BRANDT GMBH, 78048 Villingen-Schwenningen (DE)
(72) Inventor: Platte, Hans-Joachim, D-30966 Hemmingen (DE)
(74) Representative: Thies, Stephan

(57) **Abstract**

The invention refers to a device and a method for completely extracting a tray (5) from a container (1).

An object of the invention is to provide a method and a scanning device, which make possible a reduced footprint of such scanning devices being designed for very dense disk storage.

According to the invention a container (1) is partly inserted by a user into a playback device (39), a tray (5) of the container (1) is gripped by the playback device, the container (1) is extracted by the user.

## Description

The invention relates to a scanning device for magazine-type storage media, especially magazine player for optical disks, and a method to drive such player, the player having reduced footprint, i.e. needing a smaller base or less floor space than known devices.

A known solution for a reduced footprint magazine player is to remove the disk only partly from the magazine and to play back the disk in this partly removed position. This concept requires that there is enough play in radial and axial direction of the disk to allow for undisturbed play back. Hence, this concept is not possible for magazines being designed for extremely dense storing of disks. Such magazines do not allow to play back the disk if it is not completely removed as the dense packaging does not provide the necessary play. Concepts for such extremely dense storage make necessary to have a base of the player being at least double the size of the base of the magazine in order to completely remove the disk from the magazine. This footprint being double or nearly double the size of the base of the magazine is not acceptable for mobile play back devices, e.g. the known diskman (diskman might be a registered trade mark). For such devices today the small footprint requirement can only be met by using either the bare disk without any protection or a disk being stored in a so-called cartridge, the construction of which is similar to known floppy-disks. Such cartridges are provided with openings, slides or lids, which can be opened far enough in order to rotate the disk being inside the cartridge and to allow for the scanner, a so-called pick-up, to have access to the disk surface in such a manner to provide correct scanning of the disk from the innermost radius being provided with information up to the outermost radius being provided with information to be scanned. An important disadvantage of the concept using a bare disk is the absence of protection of the disk against environmental influences and against damages of its surface, especially of a surface at which information is stored. Such damages might be caused by the user. Although the cartridge concept provides for protection of the disk it also has several disadvantages, independently on how the cartridge is mechanically constructed: Automatic changer systems for cartridges are, due to physical reasons, mechanically costly, especially because of the openings for the disk drive and the scanner. Further, each cartridge can only house a single disk so that effective packaging of the disks inside the playback device is comparably poor. Further, the cartridge needs to provide sufficient play for unavoidable tolerances of the disk, for example axial or radial play. This space is needed for making possible rotation of the disk and causes, too, a very poor effective packaging density of disks inside the scanning device. Concepts for extremely dense storage reduce the play of a disk that is stored inside a container to a very minimum or to zero, thus combining high effective package density and protection of the disk against influences by environment or user. However, these concepts make necessary to remove a disk, which is to be played back, completely out of the container. This necessitates that the base of a playback device or scanning device is about double or more than the base of a single disk. From mobile devices for playing back optical disks in which the user puts the bare disk it is known that the base of the playback device is reduced to slightly more than the size or the base of the disk itself. For such devices and also for similar devices to be used in cars or mobile computers, so-called laptops, such dense storage system for disks is not applicable without increasing the dimensions of the device to an extend not acceptable for the described uses.

An object of the invention is to provide a method and a scanning device, which make possible a reduced footprint of such scanning devices being designed for very dense disk storage.

According to the invention a method for completely extracting a tray from a container, e.g. a magazine, is proposed according to which a container is partly inserted by a user into a playback device, than a tray of the container is gripped by a gripping means of the playback device and after that the container is extracted by the user. The container may also be a container for another kind of storage media than optical disks. A recording medium is held by a tray so that removing of the tray from the container removes the storing means from the magazine in order to bring it into a playback or recording position. In the following the wording playback will be used however, recording and/or scanning may also be performed in most of these cases provided that the device is equipped accordingly. An advantage of the proposed method is that the magazine needs not to be stored inside the playback device during playback. Therefore, less space is needed, which allows for a more compact design of the device. Advantageously, the force exerted by the user when inserting the magazine into the device or removing it from the device is used to power at least some of the actions performed by the device. This reduces the number and/or the necessary power of motors or actuators needed. Thus, less space is needed for the device, its weight can be kept small and its costs can be kept low. Further, less electrical power consumption is reached, which is especially advantageous for mobile devices.

An inventive method further provides for the device to further move the container actively into the device after it has been partly inserted by the user. This movement is continued until a gripping position of the container is reached. When a tray of the container is gripped the container is at least partly moved out of the device by an actuation force of the device. This has the advantage that there is less work to be done by the user and that reaching of the necessary insertion depth for gripping a tray is assured, as the movement of container and/or tray is at least partly done automatically.

After the tray is gripped it is advantageously inserted further into the device. This insertion may either be done by a force generated by a motor or by a force generated by the user. This has the advantage that only a single tray needs to be moved completely into a position provided for playback while the container is not moved such far. Therefore, less movement power is needed and less space needs to be provided inside the device as the dimensions of a tray are smaller than those of the container. Advantageously, it is checked at an early stage of the insertion process that the type of container to be inserted is the correct type and/or that the container is oriented correctly. This has the advantage that it prevents malfunction of the device by detecting at an early stage the container type and orientation and, in case these are not suitable for the device, stopping further insertion process.

A device according to the invention, being equipped with means to extract a tray holding a recording medium such as an optical disk out of a container, which container is housing several trays at extremely dense packaging, comprises detection means for detecting a correct insertion position of the container. This has the advantage that it prevents malfunction of the device. The detection means is preferably a moveable element being arranged in a first blocking position when no container is yet inserted, being moveable into an identification position by a force generated by the insertion movement of the container, the identification position being a non-blocking position in case of correct orientation of the container and a blocking position in case of non-correct orientation of the container. The moveable element may be moveable linearly or rotatably. The advantage of such detection means is that inserting of a wrong container or a wrongly oriented container is prevented. No electrical power consumption is needed if the detection means is actuated completely mechanically especially if it is actuated by the insertion movement of the container. Preferably two or more detection means are provided for identifying container type and/or position at different identification positions. This has the advantage that it increases reliability by reducing the probability of many identifiers being by chance indicated to be correct.

Preferably, the moveable element is a lever gripping, in its identification position, into a hole of the container. This has the advantage that the moveable element may, at the same time, be used as movement actuator to insert the container powered by the device.

Advantageously, a device according to the invention is provided with an actuator being actuated by the container when the actuator is acting on a tray gripping means for moving it from a playback position into a gripping position and vice versa. This has the advantage that no motor for tray and/or container movement is necessary, which is especially desirable for mobile devices depending on mobile power supply.

Preferably, a device according to the invention is provided with positioning means for the extraction means and/or the container for correct positioning of tray or extraction means relative to the container. This has the advantage that, independent of an empty position of the container into which position the tray shall be inserted when removing the tray from the container, a correct positioning of tray and container relative to each other is reached. This prevents malfunction of the device. The positioning means may for example provide linear movement of one or both of extraction means, tray and container in a direction having a component perpendicular to the insertion direction of the container. The positioning means may also provide for a tilting or rotating-like movement for aligning tray and container in order to provide correct positioning.

Further advantages can be seen from the figures and the following description of preferred embodiments. The invention, however, is not restricted to these embodiments. Measures within the range of a skilled person are also covered by the invention. The figures show:
- Fig. 1:: perspective view of a container used with the invention;
- Fig. 2:: perspective view of partly opened container;
- Fig. 3:: Cross sectional view of a part of a container;
- Fig. 4:: bottom view of a container;
- Fig. 5:: different type of container;
- Fig. 6:: tray detection means;
- Fig. 7:: container and device before insertion;
- Fig. 8:: correct container type and orientation position;
- Fig. 9:: gripping position;
- Fig. 10:: release positioning of extraction means;
- Fig. 11:: release position for tray;
- Fig. 12:: remove position of tray;
- Fig. 13:: start of container ejection;
- Fig. 14:: playback position reached;
- Fig. 15:: user actuated loading.

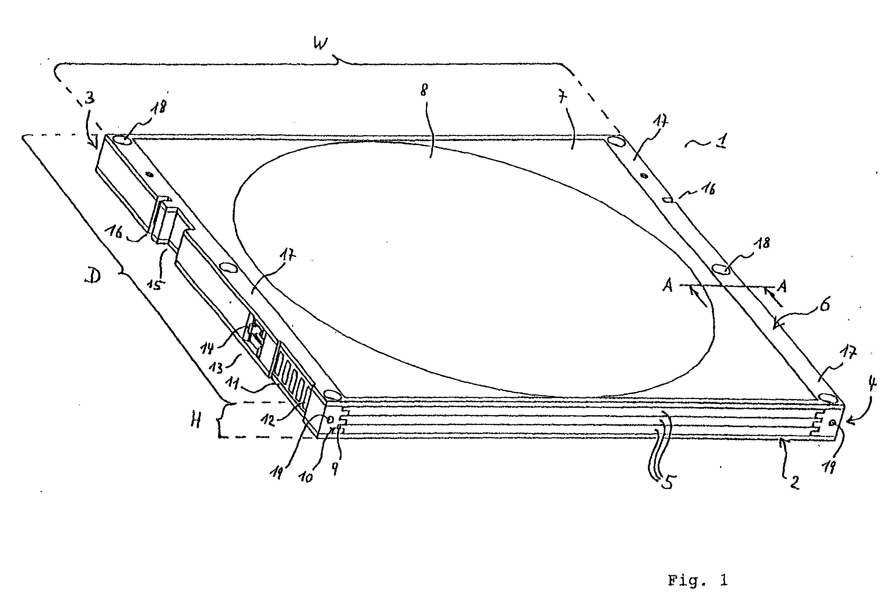

Fig. 1 shows a perspective view of a container 1 used with the invention. The container consists of a bottom plate 2, side walls 3, 4 between which trays 5 are arranged and a cover plate 6. The cover plate 6 is provided at its upper, outer surface with a rectangular depression 7 in which a circular, transparent window 8 is arranged. Preferably, the transparent window 8 consists of the same material as the rectangular depression 7, wherein just the surface of the window 8 is smooth while the surface of the depression 7 is rough, so that transparency or intransparency is reached. Through the transparent window 8 it is easy to check the content of the upper one of trays 5.

The height H of the container 1 of Fig. 1 is much smaller than its depth D and its width W, both defining a first base line D and a second base line W of a rectangle being given by the dimensions of bottom plate 2 or cover plate 6. In the embodiment of Fig. 1 the dimensions of height H equals H=10mm, depth D equals D=125mm and width W equals W=142mm. These dimensions are identical with those of a usual optical disk container, also called Jewel box. However, the container 1 according to the invention is able to store up to three disks 25 instead of a single one according to the usual container. As can be seen at the front side of container 1, the height of bottom plate 2 and cover plate 6 is half the size of each of the trays 5. That means, if two identical containers 1 are stacked one upon the other the difference between two trays 5 is always an integer multiple of the height of one tray 5, as the height of neighbouring bottom plate 2 and cover plate 6 add together to the height of one tray 5. As can be seen further the front sides of the trays 5 are plane and form together with the respective front sides of bottom plate 2, cover plate 6 and side walls 3, 5 a substantially plane front surface.

The trays 5 are provided with projections 9 at the upper end and being guided in guide grooves 10 of the side walls 3, 4. At the left side of the container 1, at side wall 3 there is arranged an identification area 11 which, in the Figure, comprises several electrical contacts 12. Instead of electrical contacts, it is also possible to arrange for optically accessible markings as for example a bar code or other contactless identification means. There is further provided read-write protection means 13, consisting of three dip-switches 14 for manually setting a read or write protection for each of the trays 5. Side wall 3 is further provided with an orientation groove 15 which has no counterpart at the other side and which is arrange asymmetrically, so that correct orientation of the container 1 can be assured by use of orientation groove 15. A release groove 16, which is also present at side wall 4, can be accessed in order to release one or several of the trays 5 to be able to be slit out of the container 1. Support areas 17, at which the height H is controlled to be very close to defined values are indicated, however, not visible in the scale used. There are three support areas 17 in order not to create indefiniteness. The container 1 is further provided with connector openings 18 to which connecting means may be attached in order to connect two or more containers 1 together to a single part.

Orientation grooves 19 are arranged at the height of the middle tray 5 at the front edge of the side walls 3 and 4. These orientation grooves 19 may be used in order to assure correct orientation of container 1 relative to a replay device.

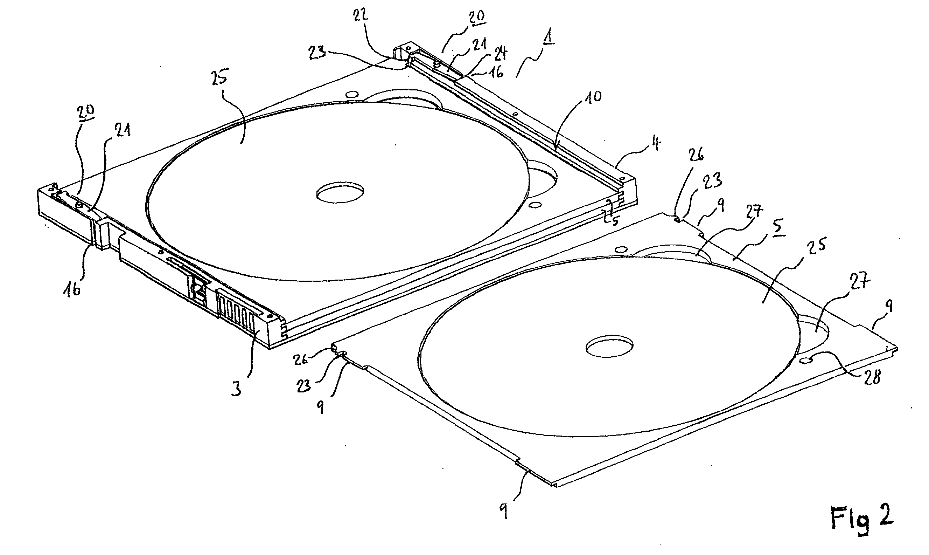

Fig. 2 shows a perspective view of a partly opened container 1. Same parts are indicated with same reference numbers throughout the application and are referred to only in case of different function or additional information. The cover plate 6 is removed in Fig. 2 (not shown) as well as the top one of trays 5 which is shown separately. Guide grooves 10 are visible now more clearly.

At the far end of side walls 3, 4 there are arranged releasable locking means 20. They consist of pivotable levers 21 having a first nose 22 to cooperate with a respective hole 23 of the tray 5 and a second nose being accessible at the release groove 16 from the outside. In the Figure, there is shown a single lever 21 in side wall 4 for releasing or locking all three trays 5 at the same time. At the other side wall 3, there are three levers 21 stacked one over another, so that by selecting one of these levers 21 a special tray to be released can be selected. Both visible trays are filled with an optical recording medium 25. The separated tray 5 shows clearly projections 9 and hole 23 to be guided in guide grooves 10. The projections 9 having holes 23 are provided with a rising edge 26 in order to move levers 21 when the tray 5 is inserted into its locked position. Gripping holes 27 are arranged within the tray 5 in order to be able to access the disk 25 by means of the fingers of a human hand. Orientation wholes 28 are provided in the tray 5 in order to assure exact positioning of the tray 5 in a playback device.

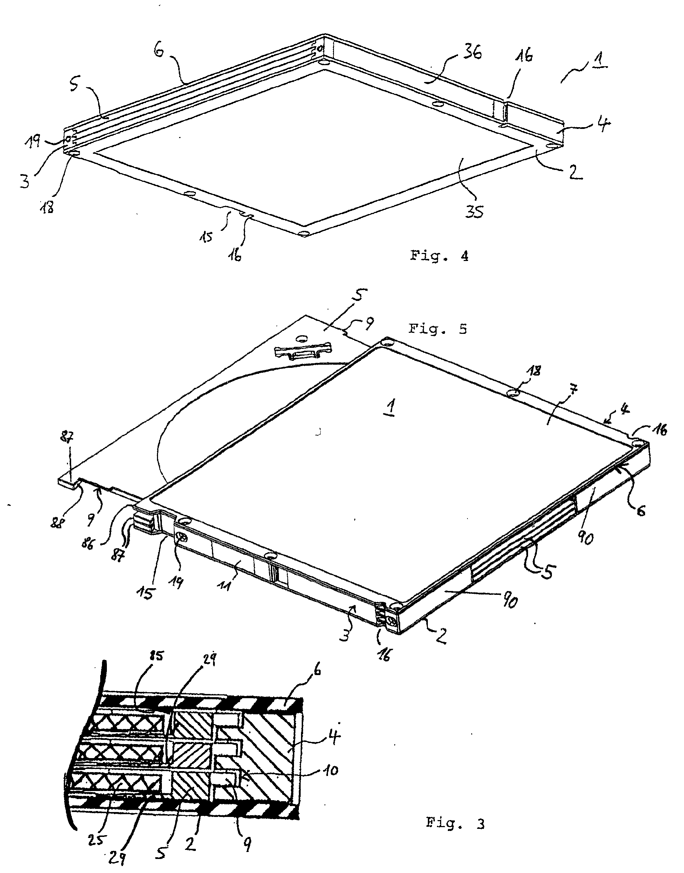

Fig. 3 shows a partly cross sectional view along line AA of Fig. 1. On the bottom plate 2 there is arranged at the right hand side a side wall 4 having guiding grooves 10. Within the guiding grooves 10 projections 9 of the trays 5 are guided. The projections 9 are arranged at the upper part of trays 5 and extend outwardly. At the lower part of the trays 5 there are arranged support areas 29 extending radially inwardly with respect to a circular depression of the tray 5. The circular depression accommodates the disk 25. As can be seen, the thickness of the support areas 29 is very small and reduces in radially inwardly direction. This ensures, that the optical recording medium 25 is supported only at its outer edge. Preferably the support areas 29 are provided with a slope at their upper surface as well as on their lower surface. This has the advantage that even in case that the container is turned upside down, the disk 25 housed in a tray 5 is supported by the neighbouring tray 5 at the sloped lower surface of its support areas 29. Similarly the inner part of cover plate 6 is provided with a sloped circular area 85 which is shown in Fig. 1A in an exaggerated manner. This sloped circular area 85 has also a disk supporting function in case of the container 1 being turned upside down.

Fig. 4 shows a bottom view of a container 1 used with the invention. The bottom plate 2 is provided with a rectangular depression 35 which depression is about 0.1 mm deep. The depression 35 is preferably used to stick a label on it. Because of the depth of the depression and the thickness of the label, which latter is smaller than the former, no additional thickness to the container 1 is added. At side wall 4 there is provided a depression 36 which is also suited for sticking a label on it. Here, too, the thickness of the label is smaller than the'depth of the depression 36 so that the size of the container 1 is not increased even if a label is sticked on it. The advantage of a label sticked at depression 36 is, that it is visible, even if several containers 1 are stacked together. In this case only the depression 35 of the lowest container 1 in the stack would be visible, whereas all depressions 36 of the stacked containers 1 are visible, and thus all labels arranged there. In order to increase the size of depression 36 release groove 16 might be arranged nearer to the end of side wall 4. The dimensions of the outer surfaces of trays 5 and the parts surrounding trays 5 are such that there is only very small open space between trays 5 and surrounding parts. This ensures that it is very unlikely that dust or other particles that might have a disturbing effect may enter into the container 1.

Fig. 5 shows, in a perspective view, a different type of container used with the invention. Most parts are similar to those as described above especially with regard to Fig. 1 and therefore not described in detail here. Orientation groove 15 is arranged near the front edge 86 of the container. The side wall 3 does not extend up to this front edge 86 so that there is a space between bottom plate 2 and cover plate 6. Into this space hooks 87 of trays 5 extend. The hooks 87 have a slightly inclined face 88 in order to reliably coact with a pulling nose 113 (not shown) of a push-pull element 89 (not shown) for removing the tray 5 from container 1. Container 1 of this embodiment is provided with orientation grooves 19 at side walls 3,4 in order to provide for correct positioning of container 1 within a magazine or another storing device. Orientation grooves 19 as well as connector openings 18 may also be used to seize or grab container 1 in order to move it e.g. into a magazine type player or within such device. Also other openings or recesses of container 1 as e.g. orientation groove 15 may be used therefore. Container 1 is further provided with back walls 90 at least partly closing the back side of container 1 which is the visible side in the drawing. Thus the container is open for removal and insertion of trays 5 only at its front side while the opposite side, the back side, is partially closed. Back walls 90 assure higher stability of the container 1. It is to be understood that many of the features described here but not shown in other embodiments described elsewhere in this application may advantageously be incorporated there and vice versa.

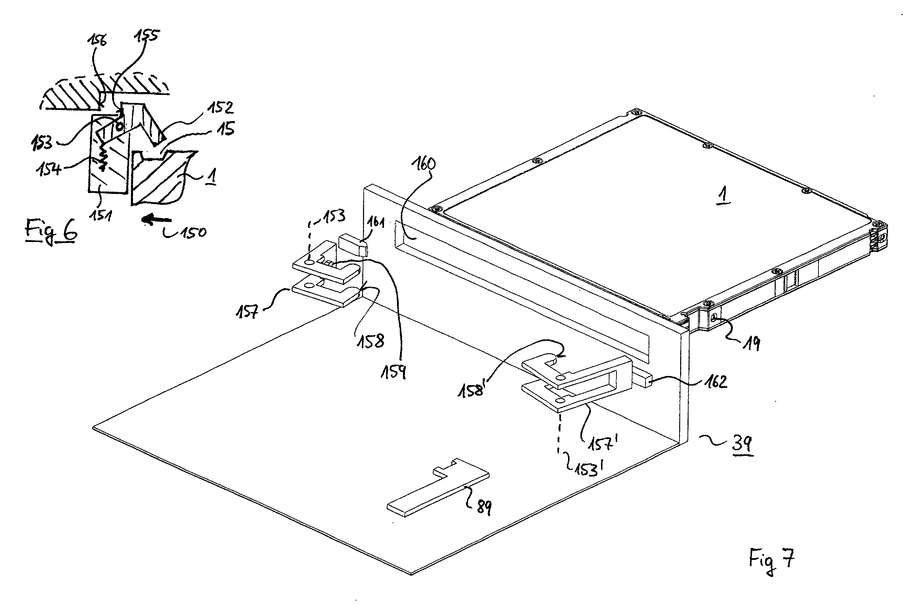

Fig. 6 shows diagrammatically detection means for detecting correct container position. Container 1 and orientation groove 15 are shown partially. When container 1 is inserted into the device it moves as indicated by arrow 150. It then abuts an abutting part 151 of the detection means to which abutting part 151 a rotatable part 152 is connected. Parts 151, 152 form a moveable element, which is moved by the force exerted by container 1 in direction of arrow 150. Rotatable part 152 is rotatable about an axis 153, which is fixed to abutting part 151 and it is held in its shown position by means of a spring 154. The shown position is the blocking position of the detection means: After a certain distance is traveled phase 155 of rotatable part 152 abuts phase 156 of the device. If container 1 is oriented correctly, orientation groove 15 is at a position as shown in Fig. 6. When phases 155 and 156 abut a force is exerted on rotatable part 152, which starts to rotate in clockwise direction about axis 153. The right arm of rotatable part of 152 enters into orientation groove 15 so that part 152 assumes a non-blocking position, in which phases 155 and 156 are no more in contact. Further movement of container 1 and parts 151, 152 is thus possible. If a wrong container is inserted or a correct container is inserted in a wrong orientation, no orientation groove 15 is present so that rotatable part 152 is not permitted to rotate. It thus stays in its blocking position and blocks further insertion of container 1.

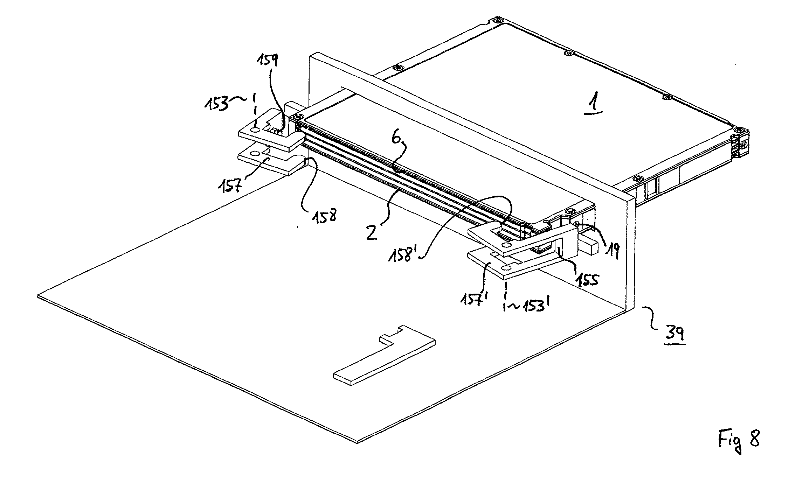

Fig. 7 shows a device 39 according to the invention before insertion of a container 1 in a perspective partly diagrammatical view. For clarity of view only those parts necessary for describing features of the invention are shown while other parts are omitted from this view. As detection means two levers 157, 157' are shown being pivotable about an axis 153, 153'. One arm of lever 157, 157' is provided with an abutting surface 158, 158' while the other arm is provided with an identification pin 159 (not visible in this view for lever 157'). A push-pull element 89 serves as a tray gripping means. Push-pull element 89 as well as first and second tray release pins are part of extraction means for extracting a tray from container 1.

For inserting recording medium into device 39 a container 1 is inserted by a user through slit 160 into the device 39. Fig. 8 shows the position of container 1, in which correct container type and orientation are checked. Abutting surfaces 158, 158' comes soon into contact with the front part of bottom plate 2 and cover plate 6 of container 1. This causes levers 157, 157' to rotate about axis 153, 153', thereby moving actuation pin 159 into a hole of container 1. For lever 157' this hole is orientation groove 19. If there is no hole available for identification pins 159 of both levers 157, 157', at least one of the levers 157, 157' stays in its blocking position as shown in Fig. 8 and further insertion of container 1 is thus blocked as phase 155 abuts on phase 156 (not shown) of device 39.

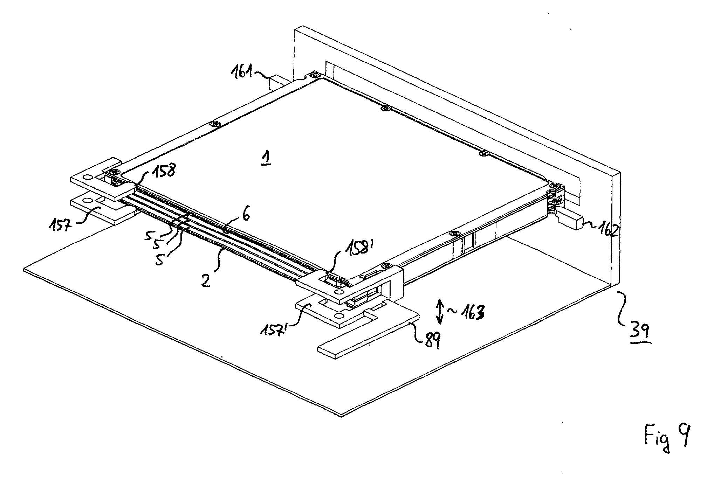

Fig. 9 shows container 1 so far inserted into device 39 that its gripping position is reached. Levers 157, 157' are shown here in their non-blocking position, in which abutting surfaces 158, 158' are in contact with bottom plate 2 and cover plate 6 and pins 159 are in contact with holes of container 1. The extraction means of which push-pull element 89 and tray release pins 161, 162 are shown here are now moved in direction of arrow 163 for assuming the correct vertical position of the one of trays 5, which is to be removed.

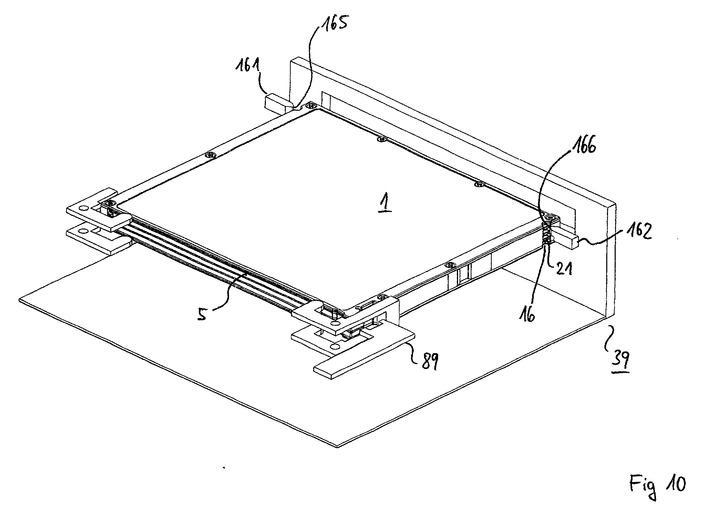

Fig. 10 shows the state where the relative vertical position of push-pull element 89 and tray release pins 161, 162 is reached. These parts are now moved in horizontal direction in order to coact with container 1 or the tray 5 to be removed, respectively. It is to be noted that first tray release pin 161 is provided with the contact phase 165 extending over its complete vertical height while second tray release pin 162 is provided with a shortened contact phase 166 for contacting only a single one of pivotable levers 21 of release groove 16.

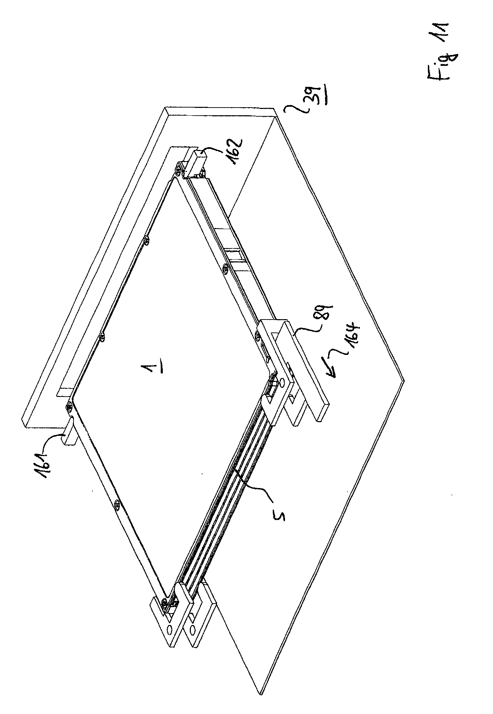

Fig. 11 shows the release position for the upper tray 5, in which push-pull element 89 is in contact with hook 87 (not visible here) and release pins 161, 162 are in contact with the respective levers 21 (not visible). Movement of push-pull element 89 in direction of arrow 164 is now started to start removal of tray 5 from container 1.

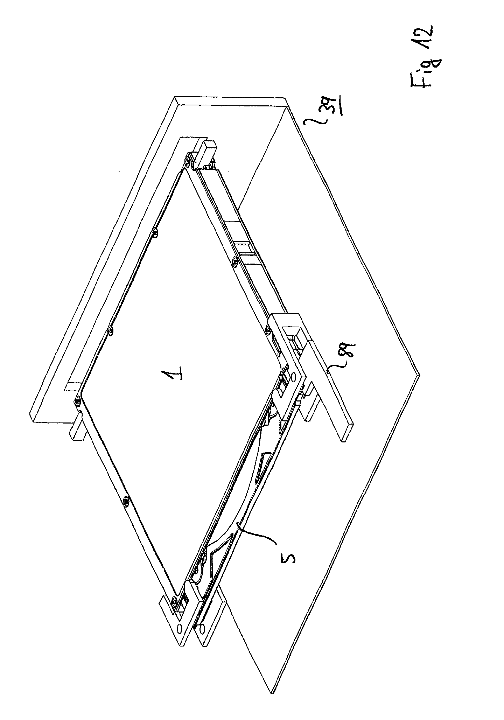

Fig. 12 shows this partly removed position of tray 5 from container 1.

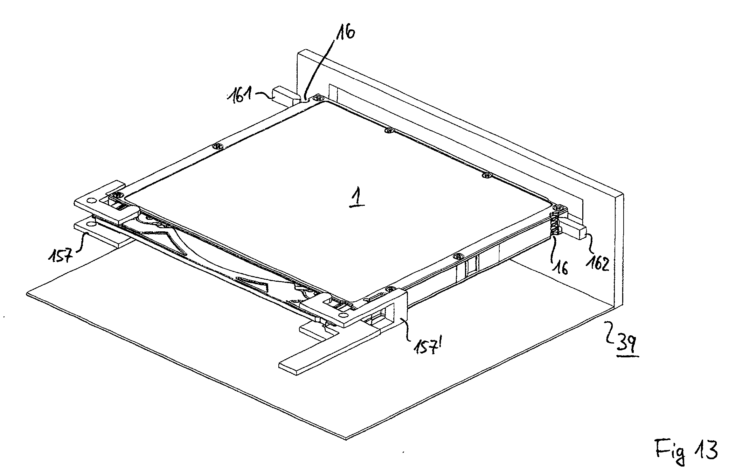

Fig. 13 shows the start of the ejection of container 1. In this position tray release pins 161, 162 are already moved away from release grooves 16 so that levers 157, 157' start movement in container eject direction.

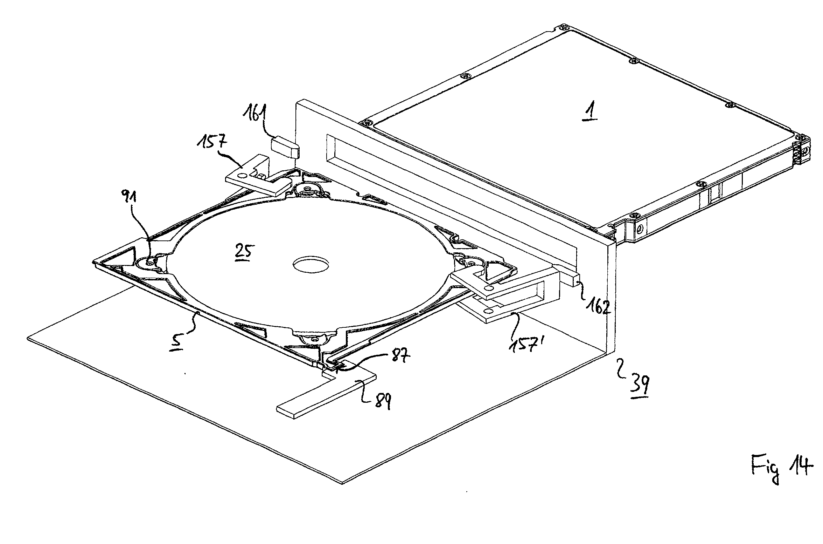

Fig. 14 shows the situation, in which the recording medium disk 25 is in a position where playback actions can be started and container 1 is completely removed from device 39. In this view gripping between push-pull element 89 and hook 87 can be seen more clearly. In the embodiment of tray 5 as shown disk holders 91 are to be actuated to release disk 25 to assume a playback position. Movement of levers 157, 157', of push-pull element 81 and tray release pins 161, 162 is performed by means of electrical motors of the device, which are not shown here. That means forces to be actuated by the user are limited to the first partly insertion of container 1 into a position reached shortly after the position as indicated in Fig. 8 and corresponding removal of tray 1 from device 39 from the corresponding position. However, also a greater amount of the necessary movements may be performed using the user's power.

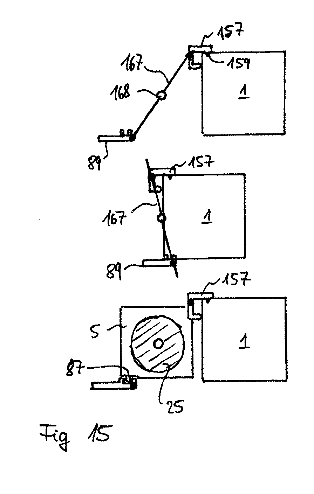

Fig. 15 shows a diagrammatical view of user actuated loading and deloading of container 1. The upper part of Fig.15 shows container 1 in a position where lever 157 has already reached its non-blocking position with pin 159 being inserted into a respective hole of container 1. Lever 157 is linked to push-pull element 89 via a lever 167 being rotatable about axis 168. When container 1 is further moved inside the device, here to the left, by the user it assumes the position as shown in the middle part of Fig. 15. By the force actuated on push-pull element 89 via lever 167 and lever 157 push-pull element 89 has reached the position to coact with hook 87 of tray 5. Now, the user grips container 1 and moves it to the right in order to remove it from the device. Thereby, lever 167 is turned and push-pull element 89 is moved to the left. Thereby, also tray 5 is moved to the left and reaches the playback position as shown in Fig. 15. Container 1 may now be removed completely for removal of tray 5 container 1 is inserted, coacts with lever 157 and reaches the following positions as seen in Fig. 15 from bottom to top part.

On first sight it seems to be physically impossible to propose a playback mechanism for a container 1, especially a magazine, of the type having an opening at one side and being closed at five sides, which playback device is in its base only slightly larger than the container 1 or the storage medium 25 housed by the container 1, wherein the storage medium is to be removed from the container 1 for playback. This is the situation when a disk 25 being housed in such container 1 is to be played back in a portable device, a car CD player or a laptop drive if it is desired not to remove the disk 25 manually from the container 1. A concept of the invention is as follows: a playback device 39 according to the invention is provided with a slit 160 for inserting the container 1. This insertion happens with the open side of the container 1 first. The device 39 further has a guiding means, which allows for manual insertion or mechanical insertion of the container 1 into the player. The container 1 is inserted so far inside the device 39 that the recording medium, especially an optical disk 25, assumes a position, in which its center hole is near to, or exactly at, the position where the disk motor (not shown) for driving the disk 25 is positioned. In this position an extraction means, e.g. a mechanical lever, which is shown here as push-pull element 89, contacts the tray 5 of the disk 25 to be played back and holds this tray 5 in its current position, while the cover, here the container 1 and further trays and/or disks, if present, is removed from the device. Removal may be performed completely by actuation of the user or at least partly by actuation of a motor of the device. As soon as the user has removed the magazine 1 completely out of the device the disk 25 is released from the tray 5 and played back.

After playback is completed the user inserts a magazine 1 having at least one empty slot for a tray 5 into the magazine slit 160. Special mechanics assures that the tray 5 and the disk 25, which are present inside the device 39, are positioned thus relative to the container 1 that they fit to the one or one of the several empty slots of the magazine without additional action of the user. Even if the empty slot happens to be at a different position than the slot from which the tray was removed when being inserted into the device correct positioning to an empty tray slot is assured. The magazine 1 is further inserted manually, at least partly and, if applicable, in addition inserted automatically by the device until the tray 5 accommodating the disk 25 that was played back is entered completely into the magazine 1. The correct position of said tray 5 in the container 1 is assured preferably by use of a tray lock lever 21. Then, the magazine 1 is removed from the device as a whole, that means including the tray 5, which accommodates the disk 25 played back before insertion of the magazine. Removal is at least partly performed by the user and may be assisted by a motor of the device. After complete removal of the magazine 1 from the device 39 the device is ready for insertion of the next disk 25. This disk 25 may be taken from the same or a different magazine 1, which is to be inserted again. The user may indicate which tray 5 of several trays housed in the magazine 1 shall be removed from the magazine for being played back. Another possibility is to provide the device with means to alternately take the tray 5 of the next slot position of the magazine 1. In case of three slot positions as shown in the figures, a first position shall be the lowest position, a second position the middle position and a third position the upper position. The next slot position to be engaged shall always be the number following the previous slot number, and in case the previous slot is the third position, the next position to be engaged is the first position.

In case that the user has, before or when entering the magazine 1 into the device 39, selected which disk 25 is to be played back the tray 5 holding said disk 25 is kept inside the player, that is it is held while the magazine 1 is removed from the device. In case that the title or the author of the music or any other data to be played back is previously determined by the user by means of an appropriate user interface the device checks, when entering the magazine 1, via a "memory in magazine means", here e.g. via identification area 11 and electrical contacts 12, which disk contains the desired information. Then the tray 5 carrying this disk is held in the device 39 when the magazine is removed. When or before removing the magazine out of the device leaving one tray 5 in the device, the content of the memory in magazine is marked with an "uncertainty" flag. This flag gives an indication that the content of the magazine 1 needs to be checked with regard to the slot or tray position from which the tray was removed as another tray carrying another disk might be inserted without the memory in magazine being updated accordingly. When the tray 5 is inserted to the magazine 1 by the device as described above, it also checks whether the content of the memory in magazine is in conformity with the content of the disk 5 to be entered and either removes the "uncertainty" flag or, if the content of the disk 5 is different to the information indicated in the memory in magazine, the memory in magazine is updated with the correct information. Thereby, the content of the memory in magazine may either be completely overwritten or, if appropriate, partly or completely held in order to easily restore if the previous disk 5 is inserted again. Of course, this makes necessary the availability of sufficient memory space.

Using the features of the invention, advantages of a very dense disk packaging magazine, as dense packaging, protection against damages of the disk, possibility of memory in magazine, simple handling, are made usable also for devices of small size, especially small space or small footprint. A user having in use such slim or very dense magazines in his home equipment has thus a simple possibility to use these dense packaging magazines not only at home but also with a portable device without the necessity to remove the bare disk from the magazine.

## Claims

1. Method for completely extracting a tray (5) from a container (1) **characterized by** the following steps:
- A container (1) is partly inserted by a user into a playback device (39),
- A tray (5) of the container (1) is gripped by the playback device,
- The container (1) is extracted by the user.

2. Method according to claim 1 **characterized by** the following steps:
- after partly insertion of the container (1) by the user, it is further inserted by the device until a gripping position is reached,
- after a tray (5) is gripped, the container (1) is at least partly ejected by the device.

3. Method according to anyone of the preceding claims **characterized in that** after gripping, the tray (5) is further inserted into the device (39).

4. Method according to anyone of the preceding claims **characterized in that** it is checked at an early stage of the insertion process that correct type of container (1) is used and/or that the container (1) is oriented correctly.

5. Device for scanning a recording medium, especially an optical disk (25), the device being equipped with extraction means to extract a tray (5) holding a disk (25) out of a container (1) housing several trays (5) at extremely dense packaging **characterized in that** it comprises detection means (151, 152, 157, 157') for detecting a correct insertion position of the container (1).

6. Device according to claim 5, **characterized in that** the detection means is a moveable element (152, 157, 157')
- being arranged in a first blocking position when no container (1) is yet inserted,
- being moveable by a force generated by the insertion movement of the container (1) into an identification position,
- the identification position being a non-blocking position in case of correct orientation of the container (1) and a blocking position in case of non-correct orientation of the container (1).

7. Device according to claim 6, **characterized in that** the moveable element is a lever (152, 157, 157'), gripping in its identification position, into a hole (19) of the container (1).

8. Device according to anyone of claims 5 to 7 **characterized in that** it is provided with an actuator (157, 167) being actuated by the container (1) the actuator acting on a tray (5) gripping means (89) for moving it from a playback position into a gripping position and vice versa.

9. Device according to anyone of claims 5 to 7, **characterized in that** it is provided with positioning means for the extraction means (89, 161, 162) and/or the container (1) for correct positioning of tray (5) or extraction means (89, 161, 162) relative to the container (1).
